# EUROPÄISCHE PATENTSCHRIFT

(11) **EP 3 954 006 B1**
(45) Veröffentlichungstag und Bekanntmachung des Hinweises auf die Patenterteilung: **11.02.2026**
(21) Anmeldenummer: 20708421.1
(22) Anmeldetag: 20.02.2020
(51) Int. Cl.: H02B 1/04, H02B 1/14, H02B 1/32, H02B 1/20, H02B 1/21

(54) **SCHALTSCHRANKANORDNUNG MIT EINEM SCHALTSCHRANKRAHMENGESTELL UND EINEM AUF EINER MONTAGEPLATTE MONTIERTEN MEHRPOLIGEN BERÜHRUNGSSCHUTZMODUL**
ELECTRICAL CABINET ARRANGEMENT WITH AN ELECTRICAL CABINET FRAME AND A MULTIPOLE TOUCH PROTECTION MODULE MOUNTED ON A MOUNTING PLATE
AGENCEMENT D'ARMOIRE ÉLECTRIQUE AVEC UNE OSSATURE ET UN MODULE DE PROTECTION CONTRE LES CONTACTS MULTIPOLAIRE MONTÉ SUR UNE PLATINE DE MONTAGE

(30) Priorität: 11.04.2019 DE 102019109638
(43) Veröffentlichungstag der Anmeldung: 16.02.2022
(73) Patentinhaber: Rittal GmbH & Co. KG, 35745 Herborn (DE)
(72) Erfinder: KAYMA, Jörg, 35745 Herborn (DE); KREILING, Jörg, 35745 Herborn-Burg (DE); BASTIAN, Andreas, 35690 Dillenburg (DE); JAKOB, Ann-Sylvia, 35641 Schöffengrund (DE); TEMME, Stefan, 35764 Sinn-Fleisbach (DE)
(74) Vertreter: Angerhausen, Christoph
(86) Internationale Anmeldenummer: PCT/DE2020/100121
(87) Internationale Veröffentlichungsnummer: WO 2020/207523

(56) Entgegenhaltungen:
- EP-B1- 3 258 558
- WO-A1-2016/019410
- WO-A1-2017/198484
- E.T.A. S.P.A.: "ETA Hauptkatalog 2014 - Enclosure solutions industrial and electronic applications", 16 July 2014 (2014-07-16), XP055719235, Retrieved from the Internet <URL:https://issuu.com/eta_spa/docs/eta_gc_release_20_de> [retrieved on 20200730]
- RITTAL -: "VX25 Brochure - Armoires �lectriques", 19 July 2018 (2018-07-19), pages 108 - 111, XP055746681, Retrieved from the Internet <URL:https://www.rittal.com/com_en/vx25/downloads/vx25_broschuere_fr.pdf> [retrieved on 20201103]
- ANONYMOUS: "Energie flexibel und sicher verteilen. Das System 185Power von W�hner", SCHALTSCHRANKBAU MAGAZINE, 13 March 2015 (2015-03-13), XP055760341, Retrieved from the Internet <URL:https://www.schaltschrankbau-magazin.de/artikel/das-system-185power-von-woehner/> [retrieved on 20201216]
- ANONYMOUS: "185 Power - Willkommen in der neuen Systemwelt", WOHNER KATALOG, 1 March 2014 (2014-03-01), XP055757681, Retrieved from the Internet <URL:https://www.woehner.de/185Power/pdf/Woehner_185mm_Broschuere_Microsite.pdf> [retrieved on 20201208]

## Beschreibung

Die Erfindung geht aus von einer Schaltschrankanordnung mit mindestens zwei Schaltschrankrahmengestellen und mindestens einem auf einer Montageplatte im Innern des Schaltschrankrahmengestells montierten mehrpoligen Berührungsschutzmodul, in dem mehrere Stromsammelschienen berührungssicher und über Kontaktierungsdurchlässe für Geräteadapter zugänglich aufgenommen sind. Eine derartige Schaltschrankanordnung ist im Katalog "185 Power- Willkommen in der neuen Systemwelt, Wöhner Katalog, 1. März 2014" beschrieben. Eine ähnliche Anordnung beschreiben auch die WO 2017/198484 A1, die EP 3 258 558 B1 und die WO 2016/019410 A1.

Die aus dem Stand der Technik bekannten Schaltschrankanordnungen haben den Nachteil, dass die Berührungsschutzmodule eine nur ineffektive Ausnutzung der lichten Einbaubreite des Schaltschrankinnenraums für die Montage von Geräteadaptern auf den Berührungsschutzmodulen erlauben. Diese Ineffektivität kommt insbesondere auch in der Anreihsituation mehrerer in Reihe miteinander verbundener Schaltschrankrahmengestelle zum Tragen, wobei die Innenräume der Schaltschrankrahmengestelle häufig zwar miteinander verbunden sind, aufgrund der Bauart der bekannten Berührungsschutzmodule eine effektive Ausnutzung des geschaffenen durchgängigen Schaltschrankinnenraums jedoch nicht möglich ist.

Es ist daher die Aufgabe der Erfindung, eine Schaltschrankanordnung der eingangs beschriebenen Art derart weiterzuentwickeln, dass eine effektive Ausnutzung des Schaltschrankinnenraums für die Montage von Geräteadaptern auf dem Berührungsschutzmodul geschaffen ist.

Diese Aufgabe wird durch eine Schaltschrankanordnung mit den Merkmalen des Anspruchs 1 gelöst. Die abhängigen Ansprüche betreffen jeweils vorteilhafte Ausführungsformen der Erfindung.

Demgemäß ist vorgesehen, dass das Endmodul mit seiner vertikalen Stirnseite mit der vertikalen Außenkante der Montageplatte fluchtet oder diese überragt, wobei mehrere der Schaltschrankrahmengestelle aneinander angereiht sind, und wobei sich das Berührungsschutzmodul unterbrechungsfrei zwischen den aneinandergereihten Schaltschrankrahmengestellen erstreckt.

Der beschriebene modulare Aufbau des Berührungsschutzmoduls erlaubt es, dass die Länge des Berührungsschutzmoduls auf eine jeweilige horizontale Breite einer vorgefundenen Montageplatte angepasst werden kann. Beispielsweise kann bei einer gegebenen Breite der Endmodule die Breite des mindestens einen Zentralmoduls derart bestimmt sein, dass die überbaubare Breite einer Montageplatte gerade einem ganzzahligen Vielfachen der Breite der Zentralmodule zuzüglich der doppelten Breite der Endmodule entspricht, wenn an den gegenüberliegenden horizontalen Längsenden des mindestens einen Zentralmoduls oder mehreren miteinander verbundenen Zentralmodulen jeweils ein Endmodul angeordnet ist.

Ebenso kann in der Anreihsituation aus mehreren Schaltschränken die Summe der überbaubaren Breite der mehreren Montageplatten zuzüglich des zwischen den Montageplatten gebildeten Abstands einem ganzzahligen Vielfachen der Breite der Zentralmodule zuzüglich der doppelten Breite der Endmodule betragen. Beispielsweise können in der Anreihsituation aus zwei miteinander verbundenen Schaltschrankrahmengestellen fünf Zentralmodule mit einer Breite von 20 cm miteinander verbunden sein und an ihren gegenüberliegenden Längsenden von jeweils einem Endmodul mit einer Breite von 5,2 cm abgeschlossen sein. Bei dieser Ausführungsform kann die Breite der Montageplatte 109,0 bis 110,4 cm betragen.

Das Gehäuse kann mit gegenüberliegenden vertikalen Stirnseiten von jeweiligen Endmodulen mit jeweils einer vertikalen Außenkante derselben Montageplatte eines einzelnen Schaltschrankrahmengestells oder mit jeweils einer vertikalen Außenkante unterschiedlicher Montageplatten einer Reihe von mindestens zwei Schaltschrankrahmengestellen fluchten.

Das Endmodul kann zweiteilig ausgebildet sein und sowohl eine an das Zentralmodul angrenzende Zentralmodulerweiterung und eine endseitig an die Zentralmodulerweiterung angrenzende und die Zentralmodulerweiterung an der vertikalen Stirnseite verschließende Endkappe aufweisen.

Die Zentralmodulerweiterung und die Endkappe können über eine lösbare Verbindung miteinander verbunden und vorzugsweise über eine Rastverbindung miteinander verbunden sein. Die lösbare Verbindung kann identisch zu einer lösbaren Verbindung zwischen zweien der mehreren Zentralmodule ausgebildet sein.

Es ist vorgesehen, dass mehrere Schaltschrankrahmengestelle aneinander angereiht sind, wobei sich das Berührungsmodul unterbrechungsfrei zwischen den aneinandergereihten Schaltschrankrahmengestellen erstreckt. Erfindungsgemäß erstrecken sich auch die Sammelschienen jeweils einteilig, das heißt als eine durchgehende ununterbrochene Schiene über die gesamte Breite der aneinandergereihten Rahmengestelle.

Dabei kann das Berührungsschutzmodul in jedem der Schaltschrankrahmengestelle an jeweils einer Montageplatte montiert und in einem Übergangsbereich zwischen den aneinandergereihten Schaltschrankrahmengestellen ein Anreihmodul aufweisen, mit dem das Berührungsschutzmodul zwei über ihre Dichtstege aneinander grenzende Vertikalstreben der aneinandergereihten Schaltschrankrahmengestelle überbaut. Dabei kann das Anreihmodul an gegenüberliegenden Seiten mit jeweils einem der Zentralmodule verbunden sein. Die Stromsammelschienen sind über ihre gesamte Länge und insbesondere zwischen den aneinandergereihten Schaltschrankrahmengestellen unterbrechungsfrei ausgebildet.

Das Anreihmodul kann ein weiteres Zentralmodul sein, das identisch zu den bereits zuvor beschriebenen Zentralmodulen ist und das an seinen gegenüberliegenden Stirnseiten mit jeweils einem der Zentralmodule verbunden ist, sodass sich eine Reihe aus mindestens drei miteinander verbundenen Zentralmodulen von einem ersten der aneinandergereihten Schaltschrankrahmengestelle in ein zweites der aneinandergereihten Schaltschrankrahmengestelle erstreckt.

Das Berührungsschutzmodul kann über seine gesamte Länge, bis auf gegebenenfalls endseitig angeordnete Endkappen, und ohne Unterbrechung äquidistante Kontaktierungsdurchlässe aufweisen, sodass bei sich über mehrere Schaltschrankrahmengestelle erstreckendem Berührungsschutzmodul schaltschrankübergreifend ein durchgängiges Raster aus Kontaktierungsdurchlässen für die Kontaktierung von Geräteadaptern geschaffen ist.

Das Anreihmodul kann mindestens zwei Zentralmodulerweiterungen aufweisen, die jeweils mit einem Zentralmodul unterschiedlicher Schaltschrankrahmengestelle verbunden sind und die über eine einteilige und durchlassfreie Abdeckung miteinander verbunden sind. Die Zentralmodulerweiterungen des Anreihmoduls können identisch zu den weiter oben beschriebenen Zentralmodulerweiterungen sein.

Die Stromsammelschienen können sich über die gesamte horizontale Breite der Montageplatte erstrecken, wobei die Stromsammelschienen zumindest an einem ihrer beiden Enden mit einer vertikalen Außenkante der mindestens einen Montageplatte fluchten oder dieser um weniger als 10 mm vor- oder nachgelagert sind.

Die Endkappen können die Stromsammelschienen an ihren Stirnseiten und davon ausgehend in ihrer Längsrichtung endseitig verdecken, so dass bei entfernter Endkappe die freien Enden der Stromsammelschienen frei zugänglich sind. Die Endkappen können beispielsweise in horizontaler Breite der Montageplatte die Stromsammelschienen um ca. 5 bis 15 cm bedecken, sodass die Stromsammelschienenenden bei entfernter Endkappe insoweit freigelegt sind.

Die Montageplatte kann im lichten Öffnungsmaß eines vertikalen Profilrahmens des Schaltschrankrahmengestells angeordnet sein, das innenseitig von zwei gegenüberliegenden, parallelen und vertikalen Profilseiten des Profilrahmens begrenzt ist. Das Endmodul kann mit seiner vertikalen Stirnseite die vertikale Außenkante der Montageplatte überragen und bis an eine der vertikalen Profilseiten des Profilrahmens heranreichen oder dieser um maximal 10 mm und bevorzugt um maximal 5 mm vorgelagert sein.

Weitere Einzelheiten der Erfindung werden anhand der nachstehenden Figuren erläutert. Dabei zeigt:
- Figur 1: in perspektivischer Darstellung eine beispielhafte Ausführungsform eines erfindungsgemäßen Berührungsschutzmoduls in teilexplodierter Darstellung;
- Figur 2: eine Draufsicht auf die Vorderseite des Berührungsschutzmoduls gemäß Figur 1;
- Figur 3: eine beispielhafte Schaltschrankanordnung aus zwei aneinander angereihten Rahmengestellen in der Vorderansicht;
- Figur 4: eine Detailansicht der Ausführungsform gemäß Figur 3; und
- Figur 5: eine weitere Detailansicht der Ausführungsform gemäß Figur 3.

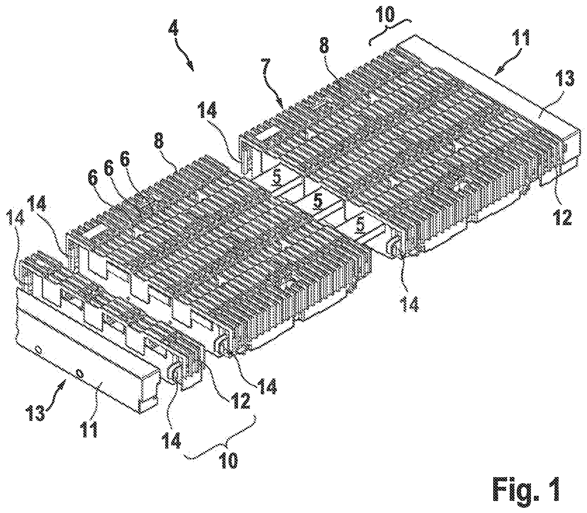

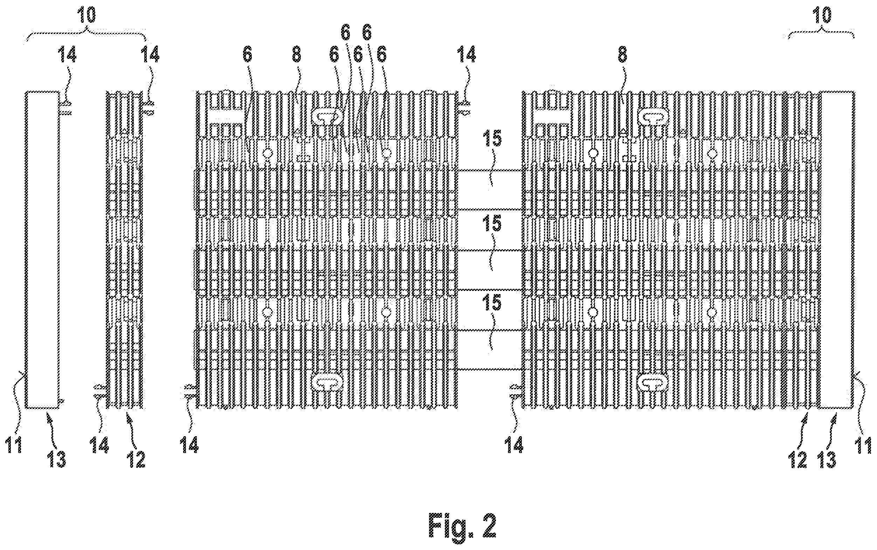

Das in den Figuren 1 und 2 gezeigte Berührungsschutzmodul 4 besteht im Wesentlichen aus zwei Zentralmodulen 8, die über eine Rastverbindung 14 miteinander verbunden und an gegenüberliegenden Längsenden von jeweils einem Endmodul 10 abgeschlossen sind. Die Endmodule 10 sowie die beiden Zentralmodule 8 bilden zusammen das Gehäuse 7 des Berührungsschutzmoduls 4, welches in der aus dem Stand der Technik bekannten Weise beispielsweise aus einem elektrisch nichtleitenden Kunststoffmaterial ausgebildet sein kann. In dem Gehäuse 7 sind drei Sammelschienen 5 berührungssicher aufgenommen und lediglich über Kontaktierungsdurchlässe 6 von der Vorderseite des Gehäuses 7 für elektrische Geräte und Adapter zugänglich. Entsprechende Geräteadapter und Kontaktklemmen sind beispielsweise in der EP 3 258 558 B1 beschrieben.

Die Endmodule 10 sind wiederum aus einer Endkappe 13 und einer Zentralmodulerweiterung 12 zusammengesetzt. Sämtliche der Verbindungen 14 sind als identische Rastverbindungen ausgebildet, sodass eine beliebige Kombination insbesondere zwischen den Zentralmodulen 8 und den Erweiterungsmodulen 12 möglich ist. Für eine Anpassung des in den Figuren 1 und 2 gezeigten Berührungsschutzmoduls 4 an eine vorgefundene horizontale Montageplattenbreite können beispielsweise auch die Erweiterungsmodule 12 entfernt und die Endkappen 13 unmittelbar auf die Zentralmodule 8 aufgerastet werden. Ebenso ist es möglich, ein oder mehrere weitere Zentralmodule 8 zwischen den beiden in den Figuren 1 und 2 gezeigten Zentralmodulen 8 zu verbinden.

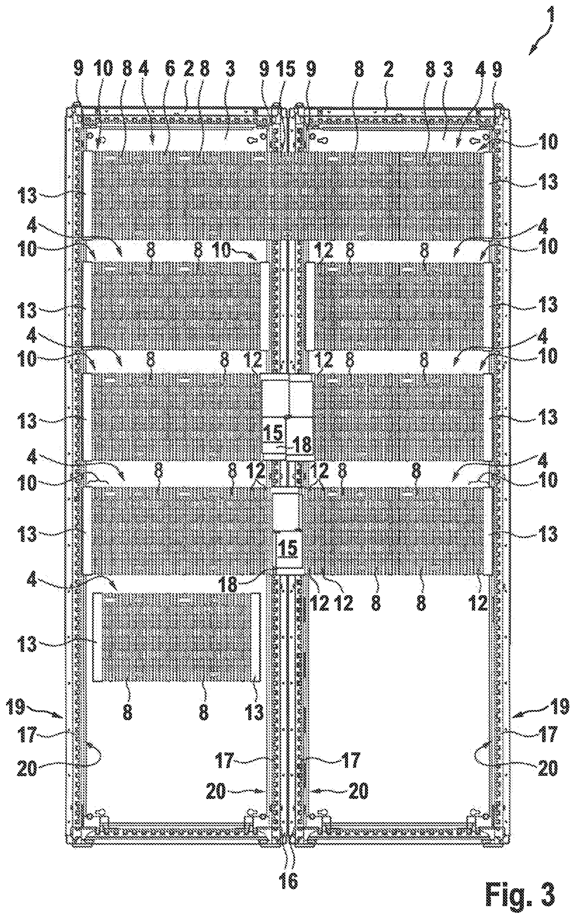

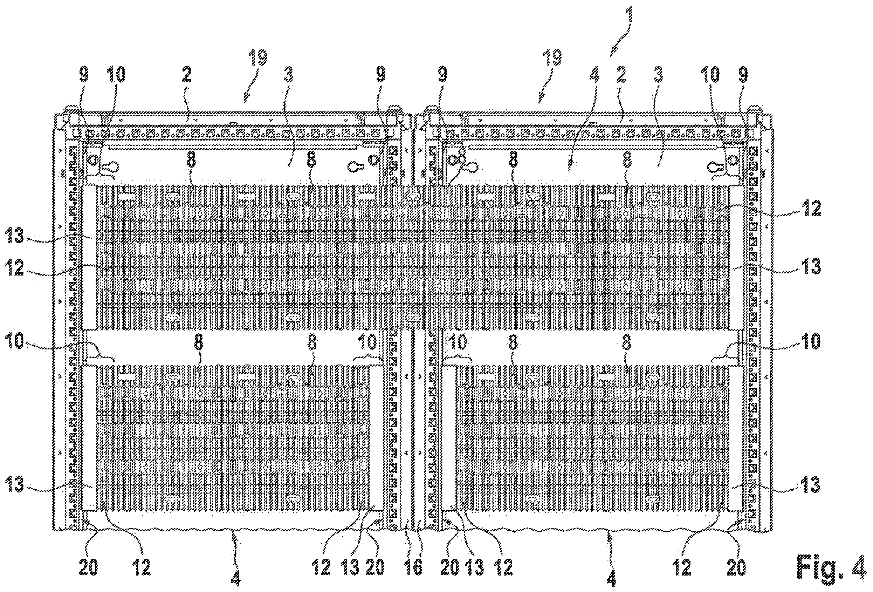

Beispielhafte Kombinationen der Einzelmodule des Berührungsschutzmoduls 4 sind in den Figuren 3 bis 5 gezeigt. Die Figuren 3 bis 5 zeigen die Anreihsituation aus zwei aneinander angereihten Rahmengestellen 2, die jeweils einen horizontalen Profilrahmen 19 aus zwei parallelen Vertikalstreben und zwei parallelen Horizontalstreben aufweisen, in dessen lichtem Öffnungsmaß jeweils eine Montageplatte 3 montiert ist. An einander zugewandten Vertikalstreben 17 der Profilrahmen 19 sind die Profilrahmen 19 über Dichtstege 16 zueinander ausgerichtet und gegeneinander abgedichtet. Auf diese Weise kann eine definierte Ausrichtung der Rahmengestelle 2 zueinander erreicht werden.

In der Darstellung gemäß Figur 3 sind sechs Berührungsschutzmodule 4 gezeigt. Das in der Darstellung obere Berührungsschutzmodul 4 ist über seine gesamte horizontale Breite, bis auf die Endkappen 13, mit Kontaktierungsdurchlässen 6 versehen, sodass eine maximale Ausnutzung des kombinierten Schaltschrankinnenraums der beiden aneinandergereihten Schaltschrankrahmengestelle erreicht wird. Optional können alternative Endkappen 13 in einer linken und rechten Ausführung vorgesehen sein, die dann jeweils zwei oder drei weitere Reihen von Kontaktierungsdurchlässen 6 aufweisen können, um die Ausnutzung des Schrankinnenraums noch weiter zu erhöhen. Das ginge dann jedoch zu Lasten der Flexibilität, da bei Bestückung der zusätzlichen Kontaktierungsdurchlässe 6 mit Geräten oder Adaptern, die alternative Endkappe nicht zur Freilegung der Sammelschienenenden abgenommen werden kann.

Insbesondere auch in einem Überbauungsbereich zwischen den beiden Innenräumen, in welchem die beiden Vertikalstreben 17 aneinander grenzen, weist das obere Berührungsschutzmodul 4 ein Anreihmodul 15 auf, welches identisch zu den Zentralmodulen 8 ausgebildet ist. An den gegenüberliegenden Enden weisen die somit fünf miteinander verbundenen Zentralmodule 8 jeweils ein Endmodul 10 auf, welches jeweils wiederum aus einer Zentralmodulerweiterung 12 und einer Endkappe 13 zusammengesetzt ist.

In der zweiten Reihe von oben sind jeweils zwei separate Berührungsschutzmodule 4 für jedes Schaltschrankrahmengestell 2 vorgesehen, sodass in einem Überbauungsbereich zwischen den Schaltschrankrahmengestellen 2 keine Montage von Geräteadaptern möglich ist, wobei andererseits jedoch auch bei dieser Ausführungsform die vollständige horizontale Breite der beiden Montageplatten 3 ausgenutzt wird. Dabei können die Zentralmodule 8 und die Endmodule 10 dieselben Abmessungen aufweisen und auch insgesamt baugleich ausgebildet sein wie die Zentralmodule 8 und die Endmodule 10 der zuvor beschriebenen, in der Darstellung gemäß Figur 3 obersten Ausführungsform des Berührungsschutzmoduls.

Bei der in Figur 3 gezeigten mittleren Ausführungsform des Berührungsschutzmoduls 4, die nicht Teil der Erfindung ist, ist dieses wiederum durchgängig zusammenhängend über die gesamte horizontale Breite der beiden aneinandergereihten Schaltschrankrahmengestelle ausgebildet, wobei in einem Überbaubereich zwischen den beiden Schaltschrankrahmengestellen 2 ein als Überbaumodul ausgeführtes Anreihmodul 15 vorgesehen ist. Das Anreihmodul/Überbaumodul 15 besteht im Wesentlichen aus einer Wanne (nicht dargestellt), durch welche sich die Sammelschienen hindurch erstrecken, wobei die Schienen in der Wanne von einer auf der Wanne aufgerasteten Abdeckung 18, die abnehmbar von der Wanne ausgebildet ist, von der Vorderseite des

Berührungsschutzmoduls 4 berührungssicher verdeckt sind. Über die Wanne ist es beispielsweise möglich, die Sammelschienen der beiden Berührungsschutzmodule 4 elektrisch miteinander zu verbinden.

Das mittlere Berührungsschutzmodul 4 kann aus vier Zentralmodulen 8 bestehen, die zu den gegenüberliegenden Enden des Berührungsschutzmoduls 4 hin über jeweils ein Endmodul 10 bestehend aus einer Zentralmodulerweiterung 12 und einer Endkappe 13 abgeschlossen sind. Dem Anreihmodul 15 zugewandt sind die beiden an den gegenüberliegenden Seiten des Anreihmoduls 15 zugewandten Zentralmodule 8 über jeweils eine Zentralmodulerweiterung 12 mit dem Anreihmodul 15 verbunden.

Die in Figur 3 gezeigte vierte Ausführungsform des Berührungsschutzmoduls von oben, die nicht Teil der Erfindung ist, unterscheidet sich dadurch, dass das wiederum als Überbaumodul ausgeführte Anreihmodul 15 eine geringere Breite aufweist und stattdessen die Zentralmodule 8 an den gegenüberliegenden Seiten des Anreihmoduls 15 über jeweils zwei Zentralmodulerweiterungen 12 mit dem Anreihmodul 15 verbunden sind.

Die unterste Ausführungsform des Berührungsschutzmoduls 4 gemäß Figur 3, nicht Teil der Erfindung, zeigt, dass die erfindungsgemäßen Einzelmodule des Berührungsschutzmoduls 4 auch dazu verwendet werden können, Berührungsschutzmodule 4 zu bilden, die nicht die gesamte horizontale Montageplattenbreite ausnutzen. Die gezeigte unterste Ausführungsform des Berührungsschutzmoduls 4, nicht Teil der Erfindung, besteht aus zwei aneinandergereihten Zentralmodulen 8, die an gegenüberliegenden Längsenden unmittelbar von einer Endkappe 13 verschlossen sind. Zu der in Figur 3 zweiten Ausführungsform von oben unterscheidet sich somit die zuletzt genannte Ausführungsform in dem Fehlen der beiden Zentralmodulerweiterungen 12 zwischen den Endkappen 13 und dem Anreihmodul 15, sodass bei der untersten Ausführungsform das Berührungsschutzmodul 4 um eine entsprechende Breite der Zentralmodulerweiterungen 12 von der jeweiligen Außenkante 9 der Montageplatte 3 beabstandet ist.

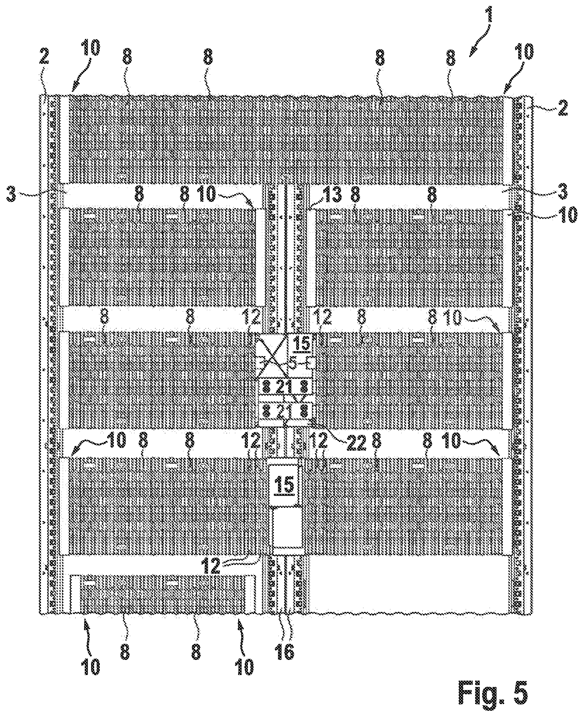

Ergänzend zeigt die Figur 5 die mittlere Ausführungsform des Berührungsschutzmoduls 4 gemäß Figur 3 mit entfernter Abdeckung 18 des als Überbaumodul ausgeführten Zentralmoduls 15. Hierbei ist die Bodenwanne 22 des Anreihmoduls 15 zu erkennen, in welche sich die Stromsammelschienen 5 über ihre freien Enden hinein erstrecken und damit für die Kontaktierung miteinander zugänglich sind. Die unteren und die mittleren Sammelschienen sind jeweils über einen Schienenverbinder 21 miteinander verbunden. Nachdem auch das obere Sammelschienenpaar über einen entsprechenden Verbinder 21 miteinander verbunden worden ist, kann die Bodenwanne 22 wiederum mit einer Abdeckung 18 verschlossen werden.

Die Verwendung derartiger Überbaumodule 15 mit einer Bodenwanne 22 und einer Abdeckung 18 ist insbesondere dann zweckmäßig, wenn eine nachträgliche Erweiterung einer Schaltschrankreihe gewünscht ist, oder wenn für das bessere Handling der Einzelschränke getrennte statt durchgehender Sammelschienen bevorzugt sind. Ausgehend von der Situation, wie sie die zweite Ausführungsform von oben der Berührungsschutzmodule 4 zeigt, können bei der Anreihung zweier Schaltschrankrahmengestelle die Endkappen 13 der gegenüber stehenden einzelnen Berührungsschutzmodule 4 entfernt werden, sodass die freien Enden der gegenüberliegenden Stromsammelschienen 5 freigelegt sind. In einem weiteren Schritt kann die Bodenwanne 22 hinter den Stromsammelschienenenden eingesetzt werden. In einem weiteren Schritt werden die Sammelschienenverbinder 21 montiert, um die Sammelschienen 5 miteinander zu verbinden. In einem abschließenden Schritt kann dann die Abdeckung 18 aufgesetzt werden, um die Verbindungsstellen berührungssicher zu bedecken.

### Bezugszeichenliste

- 1: Schaltschrankanordnung
- 2: Schaltschrankrahmengestell
- 3: Montageplatte
- 4: Berührungsschutzmodul
- 5: Stromsammelschiene
- 6: Kontaktierungsdurchlass
- 7: Gehäuse
- 8: Zentralmodul
- 9: Außenkante
- 10: Endmodul
- 11: Stirnseite
- 12: Zentralmodulerweiterung
- 13: Endkappe
- 14: Verbindung
- 15: Anreihmodul/Überbaumodul
- 16: Dichtsteg
- 17: Vertikalstrebe
- 18: Abdeckung
- 19: Profilrahmen
- 20: Profilseite
- 21: Schienenverbinder
- 22: Bodenwanne

## Patentansprüche

1. Schaltschrankanordnung (1) mit mindestens einem Schaltschrankrahmengestell (2) und mindestens einem auf einer Montageplatte (3) im Innern des Schaltschrankrahmengestells (2) montierten mehrpoligen Berührungsschutzmodul (4), in dem mehrere Stromsammelschienen (5) berührungssicher und über Kontaktierungsdurchlässe (6) für Geräteadapter zugänglich aufgenommen sind, wobei das Berührungsschutzmodul (4) ein modulares Gehäuse (7) mit mindestens einem Zentralmodul (8) oder mehreren aneinandergereihten, untereinander identischen Zentralmodulen (8) aufweist, wobei das mindestens eine Zentralmodul (8) oder mindestens eines der Zentralmodule (8) an seinem einer vertikalen Außenkante (9) der Montageplatte (3) zugewandten Ende von einem Endmodul (10) verschlossen ist, wobei das Endmodul (10) mit seiner vertikalen Stirnseite (11) mit der vertikalen Außenkante (9) der Montageplatte (3) fluchtet oder diese überragt, wobei mehrere der Schaltschrankrahmengestelle (2) aneinander angereiht sind, und wobei sich das Berührungsschutzmodul (4) unterbrechungsfrei zwischen den aneinandergereihten Schaltschrankrahmengestellen (2) erstreckt, wobei sich die Stromsammelschienen jeweils einteilig über eine gesamte Breite der aneinandergereihten Schaltschrankrahmengestelle erstrecken.

2. Schaltschrankanordnung (1) nach Anspruch 1, bei der das Gehäuse (7) mit gegenüberliegenden vertikalen Stirnseiten (11) von jeweiligen Endmodulen (10) mit jeweils einer vertikalen Außenkante (9) derselben Montageplatte (3) eines einzelnen Schaltschrankrahmengestells (2) oder mit jeweils einer vertikalen Außenkante (9) unterschiedlicher Montageplatten (3) einer Reihe von mindestens zwei Schaltschrankrahmengestellen (2) fluchtet.

3. Schaltschrankanordnung (1) nach Anspruch 1 oder 2, bei der das Endmodul (10) zweiteilig ausgebildet ist und sowohl eine an das Zentralmodul (8) angrenzende Zentralmodulerweiterung (12) und eine endseitig an die Zentralmodulerweiterung (12) angrenzende und die Zentralmodulerweiterung (12) an der vertikalen Stirnseite (11) verschließende Endkappe (13) aufweist.

4. Schaltschrankanordnung (1) nach Anspruch 3, bei der die Zentralmodulerweiterung (12) und die Endkappe (13) über eine lösbare Verbindung (14) miteinander verbunden und vorzugsweise über eine Rastverbindung miteinander verbunden sind.

5. Schaltschrankanordnung (1) nach Anspruch 4, bei der die lösbare Verbindung (14) identisch zu einer lösbaren Verbindung (14) zwischen zweien der mehreren Zentralmodule (8) ausgebildet ist.

6. Schaltschrankanordnung (1) nach Anspruch 1, bei der das Berührungsschutzmodul (4) in jedem der Schaltschrankrahmengestelle (2) an jeweils einer Montageplatte (3) montiert und in einem Übergangsbereich zwischen den aneinandergereihten Schaltschrankrahmengestellen (2) ein Anreihmodul (15) aufweist, mit dem das Berührungsschutzmodul (4) zwei über ihre Dichtstege (16) aneinander grenzende Vertikalstreben (17) der aneinandergereihten Schaltschrankrahmengestelle (2) überbaut, wobei das Anreihmodul (15) an gegenüberliegenden Seiten mit jeweils einem Zentralmodul (8) verbunden ist.

7. Schaltschrankanordnung (1) nach Anspruch 6, bei der die Stromsammelschienen (5) über ihre gesamte Länge und insbesondere zwischen den aneinandergereihten Schaltschrankrahmengestellen (2) unterbrechungsfrei ausgebildet sind.

8. Schaltschrankanordnung (1) nach Anspruch 6, bei der das Anreihmodul (15) ein weiteres Zentralmodul (8) ist, das identisch zu dem mindestens einen Zentralmodul (8) ist und das an seinen gegenüberliegenden Stirnseiten mit jeweils einem der Zentralmodule (8) verbunden ist, so dass sich eine Reihe aus mindestens drei miteinander verbundenen Zentralmodulen (8) von einem ersten der aneinandergereihten Schaltschrankrahmengestelle (2) in ein zweites der aneinandergereihten Schaltschrankrahmengestelle (2) erstreckt.

9. Schaltschrankanordnung (1) nach Anspruch 8, bei der das Berührungsschutzmodul (4) über seine gesamte Länge, bis auf gegebenenfalls endseitig angeordnete Endkappen (13), und ohne Unterbrechung äquidistante Kontaktierungsdurchlässe (6) aufweist, so dass bei sich über mehrere Schaltschrankrahmengestelle (2) erstreckendem Berührungsschutzmodul (4) schaltschrankübergreifend ein durchgängiges Raster aus Kontaktierungsdurchlässen (6) für die Kontaktierung von Geräteadaptern geschaffen ist.

10. Schaltschrankanordnung (1) nach Anspruch 6, bei der das Anreihmodul (15) mindestens zwei Zentralmodulerweiterungen (12) aufweist, die jeweils mit einem Zentralmodul (8) unterschiedlicher Schaltschrankrahmengestelle (2) verbunden sind und die über eine einteilige und durchlassfreie Abdeckung (18) miteinander verbunden sind.

11. Schaltschrankanordnung (1) nach Anspruch 10, bei der die Zentralmodulerweiterungen (12) des Anreihmoduls (15) identisch zu der Zentralmodulerweiterung (12) nach Anspruch 3 sind.

12. Schaltschrankanordnung (1) nach einem der Ansprüche 3 bis 5, bei der sich die Stromsammelschienen (5) über die gesamte horizontale Breite der Montageplatte (3) erstrecken, wobei die Stromsammelschienen (5) zumindest an einem ihrer beiden Enden mit einer vertikalen Außenkante (9) der mindestens einen Montageplatte (3) fluchten.

13. Schaltschrankanordnung (1) nach Anspruch 12, bei der die Endkappen (13) die Stromsammelschienen (5) an ihren Stirnseiten (11) und davon ausgehend in ihrer Längsrichtung endseitig verdecken, so dass bei entfernter Endkappe (13) die freien Enden der Stromsammelschienen (5) frei zugänglich sind.

14. Schaltschrankanordnung (1) nach einem der vorangegangenen Ansprüche, bei der die Montageplatte (3) im lichten Öffnungsmaß eines vertikalen Profilrahmens (19) des Schaltschrankrahmengestells (2) angeordnet ist, das innenseitig von zwei gegenüberliegenden, parallelen und vertikalen Profilseiten (20) des Profilrahmens (19) begrenzt ist, wobei das Endmodul (10) mit seiner vertikalen Stirnseite (11) die vertikale Außenkante (9) der Montageplatte (3) überragt und bis an eine der vertikalen Profilseiten (20) des Profilrahmens (19) heranreicht oder von dieser um maximal 10 mm und besonders bevorzugt um maximal 5 mm vorgelagert ist.

## Claims

1. Switchgear cabinet arrangement (1) having at least one switchgear cabinet frame (2) and at least one multipole touch protection module (4) which is mounted on a mounting plate (3) in the interior of the switchgear cabinet frame (2) and in which a plurality of busbars (5) are accommodated in a touch-proof and accessible manner via contact passages (6) for device adapters, wherein the touch protection module (4) has a modular housing (7) with at least one central module (8) or a plurality of lined up central modules (8) which are identical to one another, wherein the at least one central module (8) or at least one of the central modules (8) is closed by an end module (10) at its end facing a vertical outer edge (9) of the mounting plate (3), wherein the end module (10) is aligned with the vertical outer edge (9) of the mounting plate (3) with its vertical end side (11) or projects beyond said vertical outer edge, wherein a plurality of the switchgear cabinet frames (2) are lined up, and wherein the touch protection module (4) extends continuously between the lined up switchgear cabinet frames (2), wherein the busbars each extend in one piece over an entire width of the lined up switchgear cabinet frames.

2. Switchgear cabinet arrangement (1) according to claim 1, in which the housing (7) is aligned with opposite vertical end sides (11) of respective end modules (10) with in each case one vertical outer edge (9) of the same mounting plate (3) of an individual switchgear cabinet frame (2) or with in each case one vertical outer edge (9) of different mounting plates (3) of a row of at least two switchgear cabinet frames (2).

3. Switchgear cabinet arrangement (1) according to claim 1 or 2, in which the end module (10) is of two-part design and has both a central module extension (12) which adjoins the central module (8) and an end cap (13) which adjoins the central module extension (12) at the end side and closes the central module extension (12) at the vertical end side (11).

4. Switchgear cabinet arrangement (1) according to claim 3, in which the central module extension (12) and the end cap (13) are connected to one another via a releasable connection (14) and are preferably connected to one another via a latching connection.

5. Switchgear cabinet arrangement (1) according to claim 4, in which the releasable connection (14) is designed identically to a releasable connection (14) between two of the plurality of central modules (8).

6. Switchgear cabinet arrangement (1) according to claim 1, in which the touch protection module (4) is mounted in each of the switchgear cabinet frames (2) on in each case one mounting plate (3) and has, in a transition region between the switchgear cabinet frames (2) which are lined up in series, a line-up module (15) with which the touch protection module (4) assembles two vertical struts (17), which adjoin one another via their sealing webs (16), of the switchgear cabinet frames (2) which are lined up in series, the line-up module (15) being connected to in each case one central module (8) on opposite sides.

7. Switchgear cabinet arrangement (1) according to claim 6, in which the busbars (5) are formed continuously over their entire length and in particular between the switchgear cabinet frames (2) which are lined up in series.

8. Switchgear cabinet arrangement (1) according to claim 6, in which the line-up module (15) is a further central module (8) which is identical to the at least one central module (8) and which is connected at its opposite end sides to in each case one of the central modules (8), so that a row of at least three interconnected central modules (8) extends from a first of the switchgear cabinet frames (2) which are lined up in series into a second of the switchgear cabinet frames (2) which are lined up in series.

9. Switchgear cabinet arrangement (1) according to claim 8, in which the touch protection module (4) has contact passages (6) which are equidistant over its entire length, apart from end caps (13) which are optionally arranged at the end side, and without interruption, so that, in the case of a touch protection module (4) which extends over a plurality of switchgear cabinet frames (2), a continuous grid of contact passages (6) for contacting device adapters is created across the switchgear cabinet.

10. Switchgear cabinet arrangement (1) according to claim 6, in which the line-up module (15) has at least two central module extensions (12) which are in each case connected to a central module (8) of different switchgear cabinet frames (2) and which are connected to one another via a one-part and passage-free cover (18).

11. Switchgear cabinet arrangement (1) according to claim 10, in which the central module extensions (12) of the line-up module (15) are identical to the central module extension (12) according to claim 3.

12. Switchgear cabinet arrangement (1) according to one of claims 3 to 5, in which the busbars (5) extend over the entire horizontal width of the mounting plate (3), wherein the busbars (5) are aligned at least at one of their two ends with a vertical outer edge (9) of the at least one mounting plate (3).

13. Switchgear cabinet arrangement (1) according to claim 12, in which the end caps (13) cover the end sides of the busbars (5) at their end sides (11) and starting therefrom in their longitudinal direction, so that, when the end cap (13) is removed, the free ends of the busbars (5) are freely accessible.

14. Switchgear cabinet arrangement (1) according to one of the preceding claims, in which the mounting plate (3) is arranged in the clear opening dimension of a vertical profile frame (19) of the switchgear cabinet frame (2) which is limited on the inside by two opposite, parallel and vertical profile sides (20) of the profile frame (19), wherein the end module (10) projects with its vertical end side (11) beyond the vertical outer edge (9) of the mounting plate (3) and reaches as far as one of the vertical profile sides (20) of the profile frame (19) or is mounted in front of the latter by a maximum of 10 mm and particularly preferably by a maximum of 5 mm.

## Revendications

1. Agencement d'armoire électrique (1) comprenant au moins un châssis d'armoire électrique (2) et au moins un module multipolaire de protection contre les contacts (4) monté sur une plaque de montage (3) à l'intérieur du châssis d'armoire électrique (2), dans lequel plusieurs barres omnibus (5) sont logées de manière protégée contre les contacts et accessibles via des passages de contact (6) pour des adaptateurs d'appareils, le module de protection contre les contacts (4) présentant un boîtier modulaire (7) avec au moins un module central (8) ou plusieurs modules centraux (8) identiques les uns aux autres, alignés les uns à la suite des autres, l'au moins un module central (8) ou au moins l'un des modules centraux (8) étant fermé à son extrémité tournée vers un bord extérieur vertical (9) de la plaque de montage (3) par un module d'extrémité (10), le module d'extrémité (10) étant aligné avec ses côtés frontaux verticaux (11) avec le bord extérieur vertical (9) de la plaque de montage (3) ou le dépassant, plusieurs des châssis d'armoire électrique (2) étant alignés les uns à la suite des autres, et le module de protection contre les contacts (4) s'étendant sans interruption entre les châssis d'armoire électrique (2) alignés les uns à la suite des autres, les barres omnibus s'étendant chacune en une seule pièce sur toute la largeur des châssis d'armoire électrique alignés les uns à la suite des autres.

2. Agencement d'armoire électrique (1) selon la revendication 1, dans lequel le boîtier (7) est aligné avec les côtés frontaux verticaux opposés (11) des modules d'extrémité respectifs (10) avec respectivement un bord extérieur vertical (9) de la même plaque de montage (3) d'un seul châssis d'armoire électrique (2) ou avec respectivement un bord extérieur vertical (9) de différentes plaques de montage (3) d'une rangée d'au moins deux châssis d'armoire électrique (2).

3. Agencement d'armoire électrique (1) selon la revendication 1 ou 2, dans lequel le module d'extrémité (10) est conçu en deux parties et présente à la fois une extension de module central (12) adjacente au module central (8) et un capuchon d'extrémité (13) adjacent à l'extension de module central (12) à l'extrémité et fermant l'extension de module central (12) sur le côté frontal vertical (11).

4. Agencement d'armoire électrique (1) selon la revendication 3, dans lequel l'extension de module central (12) et le capuchon d'extrémité (13) sont reliés entre eux par une liaison amovible (14) et sont de préférence reliés entre eux par une liaison à encliquetage.

5. Agencement d'armoire électrique (1) selon la revendication 4, dans lequel la liaison amovible (14) est identique à une liaison amovible (14) entre deux des multiples modules centraux (8).

6. Agencement d'armoire électrique (1) selon la revendication 1, dans lequel le module de protection contre les contacts (4) est monté dans chacun des châssis d'armoire électrique (2) sur une plaque de montage (3) respective et présente, dans une zone de transition entre les châssis d'armoire électrique (2) alignés les uns à côté des autres, un module juxtaposable (15) avec lequel le module de protection contre les contacts (4) recouvre deux montants verticaux (17) adjacents par leurs barrettes d'étanchéité (16) des châssis d'armoire électrique (2) alignés les uns à côté des autres, le module juxtaposable (15) étant relié sur ses côtés opposés à un module central (8) respectif.

7. Agencement d'armoire électrique (1) selon la revendication 6, dans lequel les barres omnibus (5) sont conçues sans interruption sur toute leur longueur et, en particulier, entre les châssis d'armoire électrique (2) alignés les uns à la suite des autres.

8. Agencement d'armoire électrique (1) selon la revendication 6, dans lequel le module juxtaposable (15) est un autre module central (8) qui est identique au moins à un module central (8) et qui est relié sur ses faces frontales opposées à l'un des modules centraux (8) respectifs, de sorte qu'une rangée d'au moins trois modules centraux (8) reliés entre eux s'étend d'un premier des emplacements de châssis d'armoire électrique (2) alignés les uns à la suite des autres à un deuxième des emplacements de châssis d'armoire électrique (2) alignés les uns à la suite des autres.

9. Agencement d'armoire électrique (1) selon la revendication 8, dans lequel le module de protection contre les contacts (4) présente sur toute sa longueur, à l'exception éventuelle de capuchons d'extrémité (13) agencés d'un seul côté, et sans interruption, des passages de contact (6) équidistants, de sorte que, lorsque le module de protection contre les contacts (4) s'étend sur plusieurs emplacements de châssis d'armoire électrique (2), une grille continue de passages de contact (6) est créée sur l'ensemble de l'armoire électrique pour la mise en contact des adaptateurs d'appareils.

10. Agencement d'armoire électrique (1) selon la revendication 6, dans lequel le module juxtaposable (15) comporte au moins deux extensions de module central (12) qui sont chacune reliées à un module central (8) d'un emplacement de châssis d'armoire électrique (2) différent et qui sont reliées entre elles par un couvercle (18) en une seule pièce et sans passage.

11. Agencement d'armoire électrique (1) selon la revendication 10, dans lequel les extensions de module central (12) du module juxtaposable (15) sont identiques à l'extension de module central (12) selon la revendication 3.

12. Agencement d'armoire électrique (1) selon l'une des revendications 3 à 5, dans lequel les barres omnibus (5) s'étendent sur toute la largeur horizontale de la plaque de montage (3), les barres omnibus (5) étant alignées avec un bord extérieur vertical (9) de l'au moins une plaque de montage (3), au moins à l'une de leurs deux extrémités.

13. Agencement d'armoire électrique (1) selon la revendication 12, dans lequel les capuchons d'extrémité (13) recouvrent les barres omnibus (5) au niveau de leurs côtés frontaux (11) et, à partir de celles-ci, dans leur direction longitudinale, de sorte que, lorsque le capuchon d'extrémité (13) est retiré, les extrémités libres des barres omnibus (5) sont librement accessibles.

14. Agencement d'armoire électrique (1) selon l'une des revendications précédentes, dans lequel la plaque de montage (3) est agencée dans la dimension d'ouverture intérieure d'un cadre profilé vertical (19) du châssis d'armoire électrique (2), qui est délimitée à l'intérieur par deux côtés profilés (20) opposés, parallèles et verticaux du cadre profilé (19), le module d'extrémité (10) dépassant avec son côté frontal vertical (11) du bord extérieur vertical (9) de la plaque de montage (3) et s'étendant jusqu'à l'un des côtés profilés verticaux (20) du cadre profilé (19) ou étant avancé de celui-ci de 10 mm maximum et de préférence de 5 mm maximum.
